# EUROPÄISCHE PATENTSCHRIFT

(11) **EP 2 511 148 B1**
(45) Veröffentlichungstag und Bekanntmachung des Hinweises auf die Patenterteilung: **10.05.2017**
(21) Anmeldenummer: 12000228.2
(22) Anmeldetag: 17.01.2012
(51) Int. Cl.: B60W 50/14, B60W 30/095

(54) **Verfahren und Warnvorrichtung zum Warnen eines Führers eines Fahrzeugs sowie Fahrzeug**
Method and warning device for warning a driver of a vehicle and vehicle
Procédé et dispositif d'alerte pour l'alerte d'un conducteur de véhicule ainsi que véhicule

(30) Priorität: 09.02.2011 DE 102011010653
(43) Veröffentlichungstag der Anmeldung: 17.10.2012
(73) Patentinhaber: Audi AG, 85045 Ingolstadt (DE); Audi Electronics Venture GmbH, 85080 Gaimersheim (DE)
(72) Erfinder: Gackstatter, Christina, 85049 Ingolstadt (DE); Popken, Markus, 85080 Gaimersheim (DE); Reinhold, Jessica, 85055 Ingolstadt (DE)
(74) Vertreter: Thielmann, Frank

(56) Entgegenhaltungen:
- DE-A1-102006 005 021
- JP-A- H09 257 507
- US-A1- 2006 261 980

## Beschreibung

Die Erfindung betrifft ein Verfahren zum Warnen eines Führers eines Fahrzeugs mit den Schritten: Bestimmen der Position des Fahrzeugs auf einer Fahrbahn; für die bestimmte Position des Fahrzeugs, Gewinnen von Daten zu einem gekrümmten Fahrbahnverlauf im Vorfeld des Fahrzeugs; und Gewinnen von Daten zur Eigenbewegung des Fahrzeugs mit einem Fahrdynamiksensor. Die Erfindung betrifft auch eine Warnvorrichtung zur Warnung eines Führers eines Fahrzeugs. Schließlich betrifft die Erfindung auch ein Fahrzeug mit einer solchen Warnvorrichtung.

In Kraftfahrzeugen sind sogenannte Kurvenassistenten bekannt, die den Fahrzeugführer vor vorausliegenden Kurven auf der Fahrbahn warnen. Hierbei kann die momentane Geschwindigkeit des Fahrzeugs in den Warnhinweis mit einbezogen werden. Die Warnung erfolgt in der Regel grafisch auf einem Anzeigefeld im Kraftwageninnenraum unter Darstellung des Fahrbahnverlaufs, der aus Navigationsdaten gewonnen wird.

Aus der DE 10 2008 039 472 A1 ist ein Verfahren zum Betrieb eines Navigationssystems bekannt, bei dem die Kurvengeometrie einer Kurve, die im Straßenverlauf unmittelbar vor der aktuellen Position eines Kraftwagens liegt, bestimmt wird. Es erfolgt ein Vergleich der aktuellen Geschwindigkeit des Kraftwagens mit einem der aktuellen Kurvengeometrie zugeordneten Kurvengeschwindigkeitsgrenzwert, wobei bei Überschreitung dieses Grenzwerts ein Warnhinweis an den Fahrzeugführer ausgegeben wird.

Auch aus der JP 2010117839 A ist ein Fahrerassistenzsystem bekannt, das den Fahrzeugführer vor zu hohen Geschwindigkeiten bei der Kurveneinfahrt warnt.

In der JP 09 257 507 A ist eine Anzeigeeinrichtung für einen Kraftwagen beschrieben, bei welcher ein vor dem Kraftwagen befindlicher Kurvenverlauf auf einem LCD-Bildschirm stilisiert dargestellt werden kann. Im Zusammenhang mit einer Berechnung einer Fahrgeschwindigkeit, die für das Durchfahren des vorausliegenden Kurvenabschnitts günstig ist, ist bei der Anzeigevorrichtung vorgesehen, auch eine aktuelle Beschleunigung des Kraftwagens sowie Fahrbahnbedingungen, wie sie sich aufgrund von Regen, Schnee und der Oberflächenbeschaffenheit der Fahrbahn ergeben, zu ermitteln. Hierzu wird auf fahrzeugeigene Sensorik, wie beispielsweise ein ABS (Antiblockiersystem), eine Navigationsdatenbank und den Verkehrsrundfunk zurückgegriffen.

In der DE 10 2006 028 277 A1 sind eine Vorrichtung und ein Verfahren zur Kurvenvorwarnung für einen Kraftwagen beschrieben. Danach werden dem Fahrer Fahrgeschwindigkeitsempfehlungen angezeigt, für die sich eine voraussichtlich sichere Durchfahrt der Kurve ergibt. Um hierbei ein Fahrverhalten des Fahrers in der vorausliegenden Kurve mit berücksichtigen zu können, kann ein Fahrer eine Einschätzung seines Fahrstils durch Eingabe eines Eingabewerts angeben und so eine Kurvensollgeschwindigkeit berechnen lassen, die seinem Fahrstil entspricht. Um Umfeldinformationen, wie Fahrbahnnässe oder den Reibwert der Fahrbahn zu ermitteln, werden Sensorsignale von fahrzeugeigenen Sensoren sowie Signale von weiteren Steuergeräten ausgewertet.

In der DE 10 2005 055 744 A1 ist ein Fahrerassistenzsystem für ein Fahrzeug beschrieben, welches einen Dynamikverlauf für das Kraftfahrzeug berechnet und eine Empfehlung hinsichtlich des Führens des Fahrzeugs in Abhängigkeit von dem berechneten Dynamikverlauf ausgibt. Um Informationen über die Umgebung und den Betriebszustand des Fahrzeugs zu erhalten, wird auf ein Radar- oder Lidarsystem, einen Regensensor und weitere fahrzeugeigene Sensoren zurückgegriffen. Eine Positionsbestimmung erfolgt über ein GPS.

In der US 2006/261980 A1 ist ein Verfahren zum Warnen eines Fahrers eines Fahrzeugs beschrieben, in dem Kurvendaten von einem ersten Fahrzeug, welches eine Kurve durchfährt, erzeugt und an ein zweites Fahrzeug, welches die Kurve noch nicht durchfahren hat, übertragen werden.

Es ist Aufgabe der Erfindung, ein Verfahren und eine Warnvorrichtung bereitzustellen, die es einem Fahrzeugführer erlauben, das Fahrverhalten seines Kraftwagens in einer vorausliegenden Kurve besser zu beurteilen und Gefahrsituationen zu vermeiden.

Diese Aufgabe wird durch ein Verfahren, welches die Merkmale des Patentanspruchs 1 aufweist, eine Warnvorrichtung mit den Merkmalen des Patentanspruchs 7 sowie ein Fahrzeug, welches die Merkmale des Patentanspruchs 8 aufweist, gelöst.

Das erfindungsgemäße Verfahren zum Warnen eines Fahrzeugführers eines Fahrzeugs umfasst die folgenden Schritte:
- Bestimmen der Position des Fahrzeugs auf einer Fahrbahn;
- für die bestimmte Position des Fahrzeugs, Gewinnen von Daten zu einem gekrümmten Fahrbahnverlauf im Vorfeld des Fahrzeugs. Unter Kenntnis der momentanen Position des Fahrzeugs auf der Fahrbahn ist insbesondere eine Voraussage über den zukünftigen Fahrbahnverlauf möglich, wenn das Fahrzeug seine Fahrt fortsetzt und dem Fahrbahnverlauf folgt. Die Daten zu dem gekrümmten Fahrbahnverlauf im Vorfeld des Fahrzeugs können dabei in einer Speichereinheit abgelegt sein und den jeweiligen Positionen des Fahrzeugs auf der Fahrbahn zugeordnet sein. Die Daten zu dem gekrümmten Fahrbahnverlauf können jedoch auch von im Fahrzeug vorhandenen Sensoren gewonnen werden, welche das Vorfeld des Fahrzeugs beobachten. Es ist jedoch auch möglich, dass die Daten durch Datenübertragung von einem weiteren Fahrzeug oder einem Verkehrsinfrastrukturobjekt dem Fahrzeug bereitgestellt werden;
- Gewinnen von Daten zur Eigenbewegung des Fahrzeugs mit einem Fahrdynamiksensor. Der Fahrdynamiksensor kann insbesondere im Fahrzeug selbst vorliegen und dazu ausgebildet sein, Geschwindigkeiten und/oder Beschleunigungen des Fahrzeugs zu messen;
- auf der Grundlage der Daten zu dem gekrümmten Fahrbahnverlauf und den Daten zur Eigenbewegung Einteilen der gekrümmten Fahrbahn im Vorfeld des Fahrzeugs in zumindest zwei Kritikalitätszonen, wobei jeder Kritikalitätszone eine Beurteilung zugeordnet wird, welche das Fahrverhalten des Fahrzeugs innerhalb der jeweiligen Kritikalitätszone bewertet. Insbesondere kann auch eine Einteilung in drei, vier, fünf oder mehr Kritikalitätszonen erfolgen. Unter Kritikalitätszone ist ein Fahrbahnteilbereich innerhalb des gekrümmten Fahrbahnverlaufs im Vorfeld des Fahrzeugs zu verstehen, über den Daten gewonnen wurden. Jede Kritikalitätszone zeichnet sich dadurch aus, dass ihr eine, eine Kritikalität beschreibende, Beurteilung zugeordnet wird. Eine solche Beurteilung kann sich beispielsweise auf die am Fahrzeug auftretenden Querbeschleunigungen innerhalb des Bereichs der Kritikalitätszone beziehen, wenn sich das Fahrzeug innerhalb dieser Zone mit einer bestimmten Geschwindigkeit bewegt. Verschiedene Kritikalitätszonen können dieselben Beurteilungen aufweisen. Der gekrümmte Fahrbahnverlauf kann so in Kritikalitätszonen eingeteilt werden, dass sich hinsichtlich der Abfolge der einzelnen Beurteilungen eine symmetrische Beurteilungsverteilung ergibt;
- Ausgeben der Beurteilungen an den Fahrzeugführer. Die Beurteilungen können insbesondere visuell und/oder akustisch an den Fahrzeugführer ausgegeben werden. Sie können in Form von Farben, Symbolen, Piktogrammen, Markierungen und/oder Zahlwerten ausgegeben werden.

Bei dem erfindungsgemäßen Verfahren ist vorgesehen, dass bei dem Fahrzeug mittels eines Car-to-Car-Kommunikationssystems über eine Car-to-Car-Kommunikation von einem bereits im Bereich der gekrümmten Fahrbahn befindlichen zweiten Fahrzeug Informationen über Charakteristika der gekrümmten Fahrbahn empfangen werden.

Dadurch, dass der gekrümmte Fahrbahnverlauf in zumindest zwei Kritikalitätszonen eingeteilt wird, und diese Beurteilung an den Fahrzeugführer ausgegeben wird, ist eine sehr einfache und intuitive Beurteilung durch den Fahrzeugführer möglich, wie sich sein Fahrzeug hinsichtlich seines Fahrverhaltens innerhalb des gekrümmten Fahrbahnverlaufs verhalten wird. Anhand der Kritikalitätszonen kann er sehr leicht einschätzen, ob sich sein Fahrzeug kritisch verhalten wird, und innerhalb welches Teilbereichs des gekrümmten Fahrbahnverlaufs dieses kritische Verhalten einsetzt. Auf Basis dieser Beurteilungen kann er sein Fahrverhalten frühzeitig an die zu erwartende Situation anpassen und kritische Fahrsituationen zuverlässig vermeiden. Die Fahr sicherheit ist insgesamt erheblich verbessert. Die Einteilung in mehrere Zonen erlaubt eine differenzierte Beurteilung und erleichtert dem Fahrzeugführer die Einschätzung der Lage. Gemäß der Erfindung wird unter den Daten zur Eigenbewegung des Fahrzeugs zumindest eine momentane Fahrgeschwindigkeit des Fahrzeugs entlang der Fahrbahn gewonnen. Die Beurteilung bewertet dann das Fahrverhalten des Fahrzeugs in der jeweiligen Kritikalitätszone unter der Annahme, dass das Fahrzeug in der jeweiligen Kritikalitätszone die momentane Fahrgeschwindigkeit aufweist. Es wird also insbesondere bewertet, wie kritisch das Fahrverhalten des Fahrzeugs innerhalb eines bestimmten Bereichs des gekrümmten Fahrbahnverlaufs ist, wenn das Fahrzeug innerhalb dieses Bereichs seine momentane Geschwindigkeit beibehält. Je nach Krümmungsverlauf der Fahrbahn können erhebliche Querkräfte auf das Fahrzeug bei bestimmten Geschwindigkeiten auftreten, die zu gefährlichem Fahrverhalten führen können. Die Geschwindigkeit, mit der ein Fahrzeug in eine Kurve einfährt oder diese Kurve durchfährt, ist von entscheidender Bedeutung für die Fahrsicherheit innerhalb der Kurve.

Vorzugsweise ist die Beurteilung ein Maß für die Wahrscheinlichkeit, dass das Fahrzeug in der jeweiligen Kritikalitätszone nicht in der Lage ist, dem gekrümmten Fahrbahnverlauf zu folgen. Die Beurteilung gibt dann insbesondere an, ob das Fahrzeug innerhalb der Kritikalitätszone mit hoher Wahrscheinlichkeit ins Schleudern gerät bzw. übersteuerndes Fahrverhalten zeigt. Die Beurteilung kann dann insbesondere dem Fahrzeugführer intuitiv vermitteln, ob sein Fahrzeug bei Beibehaltung der momentanen Fahrparameter dem Kurvenverlauf stabil folgen wird oder stattdessen sich in einem fahrdynamischen Grenzbereich bewegt. Dem Fahrzeugführer ist es dann insbesondere möglich, unter Kenntnis der Beurteilung sein Fahrverhalten frühzeitig anzupassen - zum Beispiel indem er Geschwindigkeit wegnimmt - und so eine gefährliche Situation zu vermeiden.

Vorzugsweise werden die Daten zu dem gekrümmten Fahrbahnverlauf aus einer digitalen Karte gewonnen. Vorzugsweise umfassen diese Daten dann Daten betreffend einen Fahrbahnkrümmungsradius und/oder Daten betreffend eine Fahrbahnneigung und/oder Daten betreffend eine Fahrbahnbeschaffenheit. Die digitale Karte kann insbesondere in einem Speicher eines Navigationssystems abgelegt sein und zu den jeweiligen Fahrbahnen bzw. Kurven geeignete Daten enthalten, die die Fahrbahn näher charakterisieren. Je nach Fahrbahnkrümmungsradius, Fahrbahnneigung oder Fahrbahnbeschaffenheit ist das Fahrverhalten eines Fahrzeugs bei vorgegebener Geschwindigkeit innerhalb des gekrümmten Fahrbahnverlaufs verschieden. Diese Charakteristika erlauben deshalb eine sehr exakte Beurteilung des Fahrverhaltens des Fahrzeugs innerhalb der jeweiligen Kritikalitätszone. Gemäß der Erfindung erfolgt das Ausgeben der Beurteilung an den Fahrzeugführer visuell, wobei die Beurteilung durch eine farbige Markierung der auf einem stilisierten Fahrbahnverlauf eingezeichneten Kritikalitätszone ausgegeben wird. Erfindungsgemäß ist eine stilisierte Darstellung vorgesehen,bei der eine mehrfach gekrümmte Fahrbahn als gerade Strecke dargestellt ist und die einzelnen Kurven durch Symbole gekennzeichnet sind. Die Abfolge der Kritikalitätszonen ist dann besonders einfach durch den Fahrzeugführer erfassbar und die jeweiligen Abstände zur nächstfolgenden Kurve sind leichter abzuschätzen. Die Markierungen können insbesondere durch Signalfarben dargestellt sein, die intuitiv die Kritikalität symbolisieren. Der Fahrzeugführer wird dann von der Beobachtung des Fahrzeugvorfelds nur wenig abgelenkt, da die Vermittlung der Beurteilungen sehr intuitiv erfolgt und schnell erfasst werden kann. Alle wesentlichen Informationen sind leicht verständlich und die Fahrsicherheit steigt erheblich.

Vorzugsweise umfassen die Daten zur Eigenbewegung des Fahrzeugs Daten betreffend eine Längsbeschleunigung und/oder Querbeschleunigung des Fahrzeugs. Die Längsbeschleunigung lässt insbesondere Voraussagen über die zukünftige Geschwindigkeit des Fahrzeugs zu, so dass abgeschätzt werden kann, mit welcher Geschwindigkeit das Fahrzeug in die nächste Kurve einfährt. Dies kann für die Beurteilung der Kritikalität der jeweiligen Kurvenzonen von entscheidender Bedeutung sein. Befindet sich das Fahrzeug bereits innerhalb einer Kurve, so können die Kritikalitätszonen unter Kenntnis der momentanen Querbeschleunigung angepasst werden. Die Bewertung des zu erwartenden Fahrverhaltens des Fahrzeugs kann sehr exakt erfolgen.

Vorzugsweise erfolgt das Einteilen in die Kritikalitätszonen in Abhängigkeit der momentanen Position des Fahrzeugs auf der Fahrbahn und/oder in Abhängigkeit von momentan gewonnenen Daten zur Eigenbewegung des Fahrzeugs. Damit kann die Einteilung in Kritikalitätszonen bzw. die Ausgabe der Beurteilungen sich verändernden Fahrsituationen schnell angepasst werden. Die Einteilung kann insbesondere adaptiv erfolgen, d.h. in schnell aufeinanderfolgenden Intervallen aktualisiert werden. Alternativ oder zusätzlich kann vorgesehen sein, dass das Ausgeben der Beurteilung in Abhängigkeit der momentanen Position des Fahrzeugs auf der Fahrbahn und/oder von momentan gewonnenen Daten zur Eigenbewegung des Fahrzeugs erfolgt. Beispielsweise kann der Fahrzeugführer durch eine Veränderung der Art der Ausgabe der Beurteilungen um so deutlicher auf die Kritikalitätszonen hingewiesen werden, je weiter sich das Fahrzeug dem gekrümmten Fahrbahnverlauf nähert. Diese Ausführungsform trägt zu sehr aktuellen Beurteilungen bei, die dem Fahrer sehr intuitiv aufbereitet ausgegeben werden.

Vorzugsweise wird die Position des Fahrzeugs auf der Fahrbahn mittels eines Satellitensignalsensors bestimmt. Bei dem Satellitensignalsensor kann es sich insbesondere um einen GPS (Global Positioning System)-Sensor handeln. Mit Sensoren dieser Art ist eine sehr exakte Bestimmung der Position des Fahrzeugs auf der Fahrbahn möglich, und die Beurteilungen hinsichtlich der Kritikalität können sehr genau der jeweils momentan herrschenden Fahrsituation angepasst werden.

Eine erfindungsgemäße Warnvorrichtung, welche ausgelegt ist zur Durchführung des erfindungsgemässen Verfahrens, dient zur Warnung eines Führers eines Fahrzeugs und umfasst:
- eine Positionsbestimmungseinheit zum Bestimmen der Position des Fahrzeugs auf einer Fahrbahn. Hierbei kann es sich insbesondere um einen Satellitensignalsensor handeln;
- eine mit der Positionsbestimmungseinheit gekoppelte Datenakquisitionseinheit, welche dazu ausgebildet ist, für die bestimmte Position des Fahrzeugs, Daten zu einem gekrümmten Fahrbahnverlauf im Vorfeld des Fahrzeugs zu gewinnen;
- einen Fahrdynamiksensor, welcher dazu ausgebildet ist, Daten zur Eigenbewegung des Fahrzeugs zu gewinnen. Bei dem Fahrdynamiksensor kann es sich insbesondere um einen Geschwindigkeits- und/oder Beschleunigungssensor handeln;
- eine Bewertungseinheit, welche dazu ausgebildet ist, auf der Grundlage der Daten zu dem gekrümmten Fahrbahnverlauf und den Daten zur Eigenbewegung die gekrümmte Fahrbahn im Vorfeld des Fahrzeugs in zumindest zwei Kritikalitätszonen einzuteilen, wobei jeder Kritikalitätszone eine Beurteilung zuordenbar ist, welche das Fahrverhalten des Fahrzeugs innerhalb der jeweiligen Kritikalitätszone bewertet. Die Bewertungseinheit kann insbesondere als Recheneinheit ausgebildet sein;
- eine Ausgabeeinheit zur Ausgabe der Beurteilung an den Fahrzeugführer. Die Ausgabeeinheit kann insbesondere als visuelle Ausgabeeinheit, zum Beispiel als Display, ausgebildet sein,
- ein Car-to-Car-Kommunikationssystem, welches dazu ausgelegt ist, über eine Car-to-Car-Kommunikation Informationen über Charakteristika der gekrümmten Fahrbahn von einem bereits im Bereich der gekrümmten Fahrbahn befindlichen Fahrzeug zu empfangen.

Ein erfindungsgemäßes Fahrzeug umfasst eine erfindungsgemäße Warnvorrichtung. Bei dem Fahrzeug kann es sich insbesondere um einen Kraftwagen handeln.

Die mit Bezug auf das erfindungsgemäße Verfahren dargestellten bevorzugten Ausführungsformen und deren Vorteile gelten entsprechend für die erfindungsgemäße Warnvorrichtung und das erfindungsgemäße Fahrzeug.

Anhand von Ausführungsbeispielen wird die Erfindung im Folgenden näher erläutert. Es zeigen:
- Fig. 1: eine Aufsicht auf einen Kraftwagen, der sich auf einer Fahrbahn auf eine Kurve zu bewegt;
- Fig. 2: eine schematische Darstellung der Verarbeitung von Eingangsgrößen in einer Recheneinheit, welche Teil einer Warnvorrichtung ist;
- Fig. 3A: einen auf einer Anzeigeeinheit ausgebbaren stilisierter Fahrbahnverlauf mit Kritikalitätszonen und zugeordneten Beurteilungen in Form farbiger Markierungen gemäß einem Ausführungsbeispiel; und
- Fig. 3B: einen auf einer Anzeigeeinheit ausgebbaren stilisierten Fahrbahnverlauf mit Kritikalitätszonen und zugehörigen Beurteilungen in Form farbiger Markierungen gemäß einem Beispiel, welches nicht von den Ansprüchen umfasst ist.

In den Figuren sind gleiche oder funktionsgleiche Elemente mit den gleichen Bezugszeichen versehen.

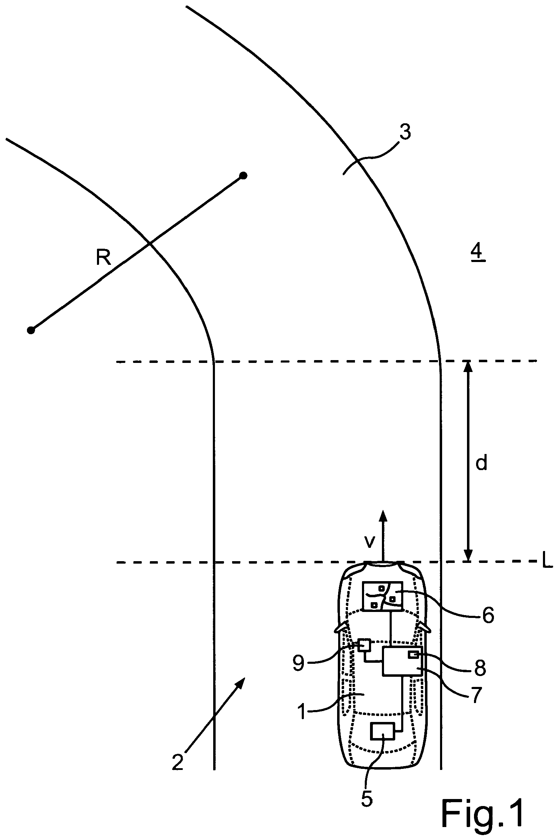

Fig. 1 zeigt einen Kraftwagen 1, welcher sich auf einer Fahrbahn 2 mit Geschwindigkeit v in die durch einen Pfeil dargestellte Richtung auf eine Kurve 3 zu bewegt. Die Kurve 3 stellt einen gekrümmten Fahrbahnverlauf der Fahrbahn 2 dar und besitzt einen Kurvenradius R. Die Kurve 3 befindet sich damit im Vorfeld 4 des Kraftwagens 1, welches sich in Fig. 1 oberhalb einer gedachten Linie L erstreckt. Ausgehend von dieser gedachten Linie L hat der Kraftwagen 1 einen Abstand d von der Kurve 3.

Der Kraftwagen 1 umfasst einen Kurvenassistenten, der vor zu schnell angefahrenen Kurven warnen soll. Der Kurvenassistent wird hierbei durch verschiedene Vorrichtungen im Kraftwagen 1 gebildet: Ein Geschwindigkeitssensor 5 erfasst die jeweils momentan herrschende Fahrgeschwindigkeit v des Kraftwagens 1. Ein GPS-Sensor 9 bestimmt die momentane Position des Fahrzeugs 1 auf der Fahrbahn 2. Eine Recheneinheit 7 verarbeitet die vom GPS-Sensor 9 und Geschwindigkeitssensor 5 gelieferten Daten und kann diese mit Daten aus einer digitalen Karte, welche in einem Speicher 8 abgelegt ist, kombinieren. Das Ergebnis der von der Recheneinheit 7 durchgeführten Analyse kann auf einem Bildschirm 6 dargestellt und einem Führer des Kraftwagens 1 visuell ausgegeben werden.

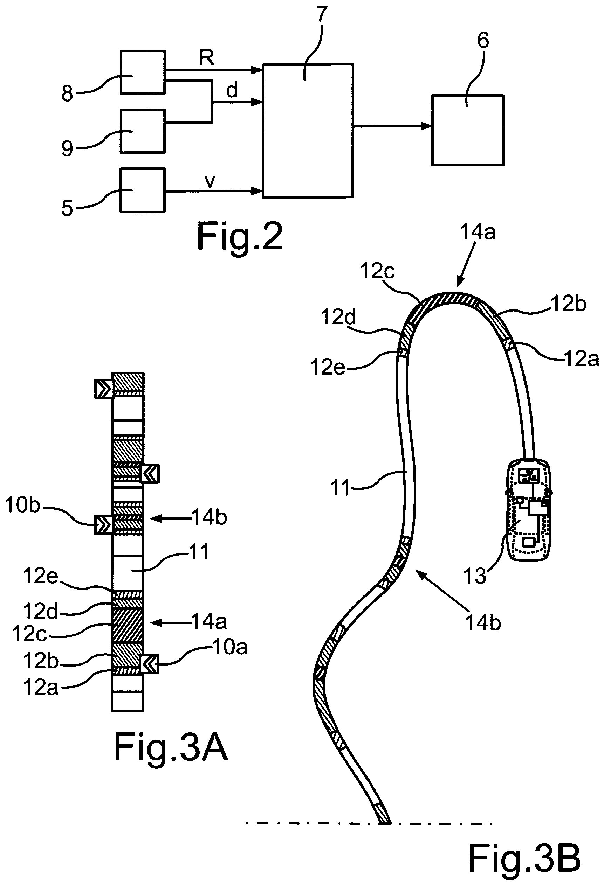

Dieser Zusammenhang ist nochmals in Fig. 2 dargestellt. Über einen Abgleich der vom GPS-Sensor gelieferten Positionsdaten des Kraftwagens 1 mit den Daten der im Speicher 8 abgelegten digitalen Karte kann der Abstand d des Kraftwagens 1 zur Kurve 3 bestimmt werden. Dieser Abstand d zur Kurve 3 steht der Recheneinheit 7 zur Verfügung. Darüber hinaus enthält die im Speicher 8 abgelegte digitale Karte auch Informationen über den Kurvenradius R der Kurve 3. Diese Information wird der Recheneinheit 7 ebenfalls zur Verfügung gestellt. Der Geschwindigkeitssensor 5 übermittelt schließlich die Geschwindigkeit v des Kraftwagens 1 an die Recheneinheit 7. Neben dem Geschwindigkeitssensor 5 können weitere Sensoren vorgesehen sein, die Eigenbewegungsdaten für den Kraftwagen 1 liefern. Beispielsweise können Beschleunigungssensoren vorgesehen sein, die der Recheneinheit 7 Daten zur Längs- und Querbeschleunigung des Kraftwagens 1 bereitstellen.

In der Recheneinheit 7 erfolgt die Berechnung der Kritikalität der Kurve 3 unter Verwendung des Kurvenradius R, des Abstands d zur Kurve und der Eigenbewegungsdaten (Geschwindigkeit v, Längs- und Querbeschleunigung). Überschreitet die Kritikalität einen gewissen Faktor, ist der Kraftwagen 1 mit seiner aktuellen Geschwindigkeit v zu schnell für die Kurve 3. Es droht ein Übersteuern oder gar Schleudern des Kraftwagens 1 in der Kurve 3. Die Recheneinheit 7 teilt dabei die Kurve 3 in verschiedene Kritikalitätszonen ein, wobei jeder Kritikalitätszone eine verschiedene Stufe der Kritikalität zugeordnet wird.

Diese Beurteilungen bzw. Kritikalitätsstufen und die relative Lage der Kritikalitätszonen zur momentanen Position des Kraftwagens 1 werden dem Fahrer anhand einer Grafik auf dem Bildschirm 6 angezeigt. Anhand der Grafik kann der Fahrer dann frühzeitig auf kritische Kurven reagieren. Es wird eine Streckenvorausschau bereitgestellt, aus der hervorgeht, wie kritisch die kommenden Kurven für den Kraftwagen 1 sind, wenn diese mit der aktuellen Geschwindigkeit v durchfahren werden. Diese Streckenvorausschau wird hierbei adaptiv an die jeweilige Geschwindigkeit v angepasst.

Fig. 3A und 3B zeigen zwei mögliche Anzeigekonzepte dieser Grafik auf dem Bildschirm 6. In Fig. 3A ist ein vertikaler Balken dargestellt, der einem stilisierten Fahrbahnverlauf 11 entspricht. An der Unterkante dieses Balkens befindet sich die Angabe "0 m", während die Oberkante des Balkens die Bezeichnung "500 m" trägt. Hiermit ist der momentane Abstand des Kraftwagens 1 zu jeweiligen Punkten auf der Fahrbahn 2 im Vorfeld 4 bezeichnet, wenn die in Wahrheit gekrümmte Fahrbahn 2 eindimensional dargestellt wird. Aus der im Speicher 8 abgelegten digitalen Karte sind die auf der Fahrbahn 2 zu erwartenden Kurven bekannt. Diese werden in Form von Kurvensymbolen 10a und 10b dargestellt. Das Kurvensymbol 10a zeigt an, dass die auf der Fahrbahn 2 nächstgelegene Kurve 3 eine Linkskurve ist. Die der Kurve 3 folgende Kurve ist dagegen eine Rechtskurve, was durch das Kurvensymbol 10b dargestellt wird.

Die durch das Kurvensymbol 10a gekennzeichnete Kurve ist hierbei in fünf Kritikalitätszonen 12a bis 12e eingeteilt. Jeder dieser Kritikalitätszonen ist eine farbige Markierung zugeordnet. Die Kritikalitätszone 12a ist gelb eingefärbt, während die darauf folgende Kritikalitätszone 12b orange markiert ist. Im Anschluss folgt die Kritikalitätszone 12c in roter Darstellung. Im Folgenden umfasst die Kurve zwei weitere Kritikalitätszonen 12d und 12e, die orange bzw. gelb markiert sind. Diese farblichen Markierungen sind nicht willkürlich gewählt, sondern entsprechen symbolischen Darstellungen der Kritikalität der jeweiligen Kritikalitätszone hinsichtlich des Fahrverhaltens des Fahrzeugs innerhalb der jeweiligen Zone. Bewegt sich der Kraftwagen 1 innerhalb der gelb markierten Kritikalitätszonen 12a und 12e mit der momentanen Geschwindigkeit v, so befinden sich die auf den Kraftwagen 1 wirkenden Zentripetalkräfte bereits in einem Grenzbereich für ein stabiles Fahrverhalten. Behält der Kraftwagen 1 seine Geschwindigkeit in den Kritikalitätszonen 12b und 12d, so droht ein Übersteuern und einzelne Räder des Kraftwagens 1 können die Haftreibung mit der Fahrbahn 2 verlieren. Dies wird durch die orange Einfärbung dieser Kritikalitätszonen symbolisiert. Die rote Einfärbung der Kritikalitätszone 12c symbolisiert dem Fahrer höchste Gefahr und zeigt an, dass der Kraftwagen 1 spätestens in diesem Bereich der Kurve schleudern wird und ein sicheres Fahrverhalten nicht mehr gewährleistet ist, wenn die momentane Geschwindigkeit v nicht zurückgenommen wird. Die in Fig. 3A gewählte Form der Darstellung ist damit für den Fahrer intuitiv leicht erfassbar und liefert ihm alle notwendigen Informationen, um das Verhalten seines Kraftwagens 1 in den vorausliegenden Kurven einschätzen zu können. Ändert der Kraftwagen 1 seine Geschwindigkeit v, so erfolgt in der Recheneinheit 7 eine Neuberechnung und Neubeurteilung der Kritikalitätszonen und die Darstellung der Fig. 3A wird entsprechend angepasst.

Die Darstellung der Fig. 3B, welche ein Beispiel zeigt, welches nicht von den Ansprüchen umfasst ist, ist etwas weniger stilisiert bzw. abstrakt als jene der Fig. 3A. Die momentane Position des Kraftwagens 1 wird durch ein Fahrzeugsymbol 13 symbolisiert, während der Fahrbahnverlauf zweidimensional wiedergegeben ist. Die Kurven 14a und 14b, welche im Vorfeld des Kraftwagens 1 liegen, sind mit ihren tatsächlichen Krümmungsradien dargestellt. Die Kurve 14a wird wiederum in fünf Kritikalitätszonen 12a bis 12e eingeteilt, wobei jede dieser Zonen in Analogie zu Fig. 3A farblich markiert wird.

Die Darstellungen der Fig. 3A und 3B werden ständig aktualisiert und adaptiv an die momentane Position und Geschwindigkeit v des Kraftwagens 1 angepasst.

Im dargestellten Ausführungsbeispiel wird die Information über den Kurvenradius R (bzw. einen Kurvenradiusverlauf) der im Speicher 8 abgelegten digitalen Karte entnommen. Alternativ kann jedoch auch vorgesehen sein, dass im Kraftwagen 1 Sensoren angebracht sind, die das Vorfeld 4 erfassen, und in der Lage sind, Informationen zum Verlauf der Kurve 3 zu gewinnen. Bei solchen Sensoren kann es sich beispielsweise um eine Kamera oder einen Laserscanner handeln. Dabei ist vorgesehen, dass der Kraftwagen 1 mit einem Car-to-Car-Kommunikationssystem ausgerüstet ist. Ein sich bereits in der Kurve 3 befindender zweiter Kraftwagen kann dann über die Car-to-Car-Kommunikation dem Kraftwagen 1 detaillierte Informationen über Charakteristika der Kurve 3 bereitstellen. Ist beispielsweise die Kurve 3 wegen überfrierender Nässe glatt, so kann dies beispielsweise durch Sensoren im vorausfahrenden Fahrzeug erfasst und über die Car-to-Car-Verbindung an den Kraftwagen 1 übermittelt werden. Dem Kraftwagen 1 stehen beispielsweise über die im Speicher 8 abgelegte digitale Karte Informationen über die Kurve 3 zur Verfügung. Mit den Daten aus der Car-to-Car-Kommunikation können diese Daten aus der digitalen Karte nun in der Recheneinheit 7 entsprechend modifiziert werden, sodass eine Neubeurteilung bzw. Neueinteilung der Kritikalitätszonen erfolgt. Die Darstellungen der Fig. 3A und 3B werden dann nahezu instantan an diese neue Informationslage angepasst, sodass dem Fahrer des Kraftwagens 1 qualitativ hochwertige Informationen zur Verfügung stehen, um sein Fahrverhalten anzupassen.

Die Einteilung in Kritikalitätszonen und/oder die Zuordnung der Beurteilungen zu den Kritikalitätszonen kann auch unter Berücksichtigung von Vorlieben des Fahrzeugführers erfolgen. Beispielsweise kann vorgesehen sein, dass der Fahrzeugführer die Recheneinheit 7 so einstellen kann, dass diese Beurteilungen gemäß einem sportlichen Fahrverhalten (höhere Kritikalitätsschwellen) oder gemäß einem komfortablem Fahrverhalten (geringe Kritikalitätsschwellen) vornimmt. Die Einteilung in Kritikalitätszonen und/oder die Zuordnung der Beurteilungen zu den Kritikalitätszonen kann auch unter Berücksichtigung der Fahrbahnbeschaffenheit (z.B. breite Fahrbahn, enge Fahrbahn, glatte Fahrbahn, etc.) erfolgen. Beispielsweise kann vorgesehen sein, dass bei glatter Fahrbahn die Kritikalitätsschwellen heruntergesetzt werden.

## Patentansprüche

1. Verfahren zum Warnen eines Führers eines Fahrzeugs (1) mit den Schritten:
- Bestimmen der Position des Fahrzeugs (1) auf einer Fahrbahn (2);
- für die bestimmte Position des Fahrzeugs (1), Gewinnen von Daten zu einem gekrümmten Fahrbahnverlauf (3) im Vorfeld (4) des Fahrzeugs;
- Gewinnen von Daten zur Eigenbewegung des Fahrzeugs (1) mit einem Fahrdynamiksensor (5), wobei
auf der Grundlage der Daten zu dem gekrümmten Fahrbahnverlauf (3) und den Daten zur Eigenbewegung, die gekrümmte Fahrbahn (3) im Vorfeld (4) des Fahrzeugs (1) in zumindest zwei Kritikalitätszonen (12a, 12b, 12c, 12d, 12e) eingeteilt wird, wobei jeder Kritikalitätszone (12a, 12b, 12c, 12d, 12e) eine Beurteilung (gelb, orange, rot) zugeordnet wird, welche das Fahrverhalten des Fahrzeugs (1) innerhalb der jeweiligen Kritikalitätszone (12a, 12b, 12c, 12d, 12e) bewertet, und die Beurteilungen (gelb, orange, rot) an den Fahrzeugführer ausgegeben (6) werden, wobei unter den Daten zur Eigenbewegung des Fahrzeugs (1) zumindest eine momentane Fahrgeschwindigkeit (v) des Fahrzeugs (1) entlang der Fahrbahn (2) gewonnen wird und die Beurteilung (gelb, orange, rot) das Fahrverhalten des Fahrzeugs (1) in der jeweiligen Kritikalitätszone (12a, 12b, 12c, 12d, 12e) unter der Annahme bewertet, dass das Fahrzeug (1) in der jeweiligen Kritikalitätszone (12a, 12b, 12c, 12d, 12e) die momentane Fahrgeschwindigkeit (v) aufweist, wobei das Ausgeben der Beurteilung an den Fahrzeugführer visuell (6) erfolgt und die Beurteilung durch eine farbige Markierung (gelb, orange, rot) der auf einem stilisierten Fahrbahnverlauf (11) eingezeichneten Kritikalitätszone (12a, 12b, 12c, 12d, 12e) ausgegeben wird, **dadurch gekennzeichnet, dass** bei dem Fahrzeug (1) mittels eines Car-to-Car-Kommunikationssystems über eine Car-to-Car-Kommunikation von einem bereits im Bereich der gekrümmten Fahrbahn befindlichen zweiten Fahrzeug Informationen über Charakteristika der gekrümmten Fahrbahn empfangen werden, wobei bei dem stilisierten Fahrbahnverlauf (11) eine mehrfach gekrümmte Fahrbahn als gerade Strecke dargestellt ist und einzelne Kurven durch Symbole gekennzeichnet sind.

2. Verfahren nach Anspruch 1,
**dadurch gekennzeichnet, dass**
die Beurteilung (gelb, orange, rot) ein Maß für die Wahrscheinlichkeit ist, dass das Fahrzeug (1) in der jeweiligen Kritikalitätszone (12a, 12b, 12c, 12d, 12e) nicht in der Lage ist, dem gekrümmten Fahrbahnverlauf (3) zu folgen.

3. Verfahren nach einem der vorhergehenden Ansprüche,
**dadurch gekennzeichnet, dass**
die Daten zu dem gekrümmten Fahrbahnverlauf (3) aus einer digitalen Karte (8) gewonnen werden und insbesondere Daten betreffend einen Fahrbahnkrümmungsradius (R) und/oder eine Fahrbahnneigung und/oder eine Fahrbahnbeschaffenheit umfassen.

4. Verfahren nach einem der vorhergehenden Ansprüche,
**dadurch gekennzeichnet, dass**
die Daten zur Eigenbewegung des Fahrzeugs (1) Daten betreffend eine Längsbeschleunigung und/oder Querbeschleunigung des Fahrzeugs (1) umfassen.

5. Verfahren nach einem der vorhergehenden Ansprüche,
**dadurch gekennzeichnet, dass**
das Einteilen in die Kritikalitätszonen (12a, 12b, 12c, 12d, 12e) und/oder das Ausgeben (6) der Beurteilung (gelb, orange, rot) in Abhängigkeit der momentanen Position des Fahrzeugs (1) auf der Fahrbahn (2) und/oder von momentan gewonnenen Daten (v) zur Eigenbewegung des Fahrzeugs (1) erfolgt.

6. Verfahren nach einem der vorhergehenden Ansprüche,
**dadurch gekennzeichnet, dass**
die Position des Fahrzeugs (1) auf der Fahrbahn (2) mittels eines Satellitensignalsensors (9) bestimmt wird.

7. Warnvorrichtung zur Warnung eines Führers eines Fahrzeugs (1) mit
- einer Positionsbestimmungseinheit (9) zum Bestimmen der Position des Fahrzeugs (1) auf einer Fahrbahn (2);
- einer mit der Positionsbestimmungseinheit (9) gekoppelten Datenakquisitionseinheit (8), welche dazu ausgebildet ist, für die bestimmte Position des Fahrzeugs (1), Daten zu einem gekrümmten Fahrbahnverlauf (3) im Vorfeld (4) des Fahrzeugs (1) zu gewinnen;
- einem Fahrdynamiksensor (5), welcher dazu ausgebildet ist, Daten zur Eigenbewegung (v) des Fahrzeugs (1) zu gewinnen,
- einer Bewertungseinheit (7), welche dazu ausgebildet ist, auf der Grundlage der Daten zu dem gekrümmten Fahrbahnverlauf (3) und den Daten zur Eigenbewegung (v), die gekrümmte Fahrbahn (3) im Vorfeld (4) des Fahrzeugs (1) in zumindest zwei Kritikalitätszonen (12a, 12b, 12c, 12d, 12e) einzuteilen, wobei jeder Kritikalitätszone (12a, 12b, 12c, 12d, 12e) eine Beurteilung (gelb, orange, rot) zuordenbar ist, welche das Fahrverhalten des Fahrzeugs (1) innerhalb der jeweiligen Kritikalitätszone (12a, 12b, 12c, 12d, 12e) bewertet, wobei unter den Daten zur Eigenbewegung des Fahrzeugs (1) zumindest eine momentane Fahrgeschwindigkeit (v) des Fahrzeugs (1) entlang der Fahrbahn (2) gewonnen wird und die Beurteilung (gelb, orange, rot) das Fahrverhalten des Fahrzeugs (1) in der jeweiligen Kritikalitätszone (12a, 12b, 12c, 12d, 12e) unter der Annahme bewertet, dass das Fahrzeug (1) in der jeweiligen Kritikalitätszone (12a, 12b, 12c, 12d, 12e) die momentane Fahrgeschwindigkeit (v) aufweist, und
- einer Ausgabeeinheit (6) zur Ausgabe der Beurteilung (gelb, orange, rot) an den Fahrzeugführer,
**gekennzeichnet durch**
ein Car-to-Car-Kommunikationssystem, welches dazu ausgelegt ist, über eine Car-to-Car-Kommunikation Informationen über Charakteristika der gekrümmten Fahrbahn (3) von einem bereits im Bereich der gekrümmten Fahrbahn (3) befindlichen Fahrzeug zu empfangen, wobei die Warnvorrichtung dazu ausgelegt ist, ein Verfahren nach einem der vorhergehenden Ansprüche durchzuführen.

8. Fahrzeug, insbesondere Kraftwagen (1), mit einer Warnvorrichtung nach Anspruch 7.

## Claims

1. Method for warning a driver of a vehicle (1), having the steps:
- determining the position of the vehicle (1) on a traffic lane (2);
- for the position of the vehicle (1) which has been determined, obtaining data relating to a curved traffic lane profile (3) in the region (4) in front of the vehicle;
- obtaining data relating to the intrinsic movement of the vehicle (1) with a vehicle dynamics sensor (5), wherein
on the basis of the data relating to the curved traffic lane profile (3) and the data relating to the intrinsic movement, the curved traffic lane (3) in the region (4) in front of the vehicle (1) is divided into at least two criticality zones (12a, 12b, 12c, 12d, 12e), wherein each criticality zone (12a, 12b, 12c, 12d, 12e) is assigned an assessment (yellow, orange, red), which evaluates the driving behaviour of the vehicle (1) within the respective criticality zone (12a, 12b, 12c, 12d, 12e), and the assessments (yellow, orange, red) are output (6) to the vehicle driver, wherein among the data relating to the intrinsic movement of the vehicle (1) at least one instantaneous driving speed (v) of the vehicle (1) along the traffic lane (2) is obtained and the assessment (yellow, orange, red) evaluates the driving behaviour of the vehicle (1) in the respective criticality zone (12a, 12b, 12c, 12d, 12e) with the assumption that the vehicle (1) has the instantaneous driving speed (v) in the respective criticality zone (12a, 12b, 12c, 12d, 12e),
wherein the output of the assessment to the vehicle driver is carried out visually (6) and the assessment is output by a coloured marking (yellow, orange, red) of the criticality zone (12a, 12b, 12c, 12d, 12e), the latter being indicated on a stylised traffic lane profile (11),
**characterised in that**
information relating to characteristics of the curved traffic lane are received in the vehicle (1) via a car-to-car communication system by means of a car-to-car communication from a second vehicle already lying in the region of the curved traffic lane,
wherein, in the stylised traffic lane profile (11), a multiply curved traffic lane is represented as a straight section and the individual curves are denoted by symbols.

2. Method according to claim 1,
**characterised in that**
the assessment (yellow, orange, red) is a measure of the probability that the vehicle (1) is not capable of following the curved traffic lane profile (3) in the respective criticality zone (12a, 12b, 12c, 12d, 12e).

3. Method according to any one of the preceding claims,
**characterised in that**
the data relating to the curved traffic lane profile (3) are obtained from a digital map (8) and in particular comprise data concerning a traffic lane radius of curvature (R) and/or a traffic lane inclination and/or a traffic lane condition.

4. Method according to any one of the preceding claims,
**characterised in that**
the data relating to the intrinsic movement of the vehicle (1) comprise data concerning a longitudinal acceleration and/or transverse acceleration of the vehicle (1).

5. Method according to any one of the preceding claims,
**characterised in that**
the division into the criticality zones (12a, 12b, 12c, 12d, 12e) and/or the output (6) of the assessment (yellow, orange, red) is carried out as a function of the instantaneous position of the vehicle (1) on the traffic lane (2) and/or of instantaneously obtained data (v) relating to the intrinsic movement of the vehicle (1).

6. Method according to any one of the preceding claims,
**characterised in that**
the position of the vehicle (1) on the traffic lane (2) is determined by means of a satellite signal sensor (9).

7. Warning device for warning a driver of a vehicle (1), having
- a position determination unit (9) for determining the position of the vehicle (1) on a traffic lane (2);
- a data acquisition unit (8), which is coupled to the position determination unit (9) and is configured, for the position of the vehicle (1) which has been determined, to obtain data relating to a curved traffic lane profile (3) in the region (4) in front of the vehicle (1);
- a vehicle dynamics sensor (5), which is configured to obtain data relating to the intrinsic movement (v) of the vehicle (1),
- an evaluation unit (7), which is configured to divide the curved traffic lane (3) in the region (4) in front of the vehicle (1) into at least two criticality zones (12a, 12b, 12c, 12d, 12e) on the basis of the data relating to the curved traffic lane profile (3) and the data relating to the intrinsic movement (v), wherein each criticality zone (12a, 12b, 12c, 12d, 12e) can be assigned an assessment (yellow, orange, red) which evaluates the driving behaviour of the vehicle (1) within the respective criticality zone (12a, 12b, 12c, 12d, 12e), wherein among the data relating to the intrinsic movement of the vehicle (1) at least one instantaneous driving speed (v) of the vehicle (1) along the traffic lane (2) is obtained and the assessment (yellow, orange, red) evaluates the driving behaviour of the vehicle (1) in the respective criticality zone (12a, 12b, 12c, 12d, 12e) with the assumption that the vehicle (1) has the instantaneous driving speed (v) in the respective criticality zone (12a, 12b, 12c, 12d, 12e), and
- an output unit (6) for output of the assessment (yellow, orange, red) to the vehicle driver,
**characterised by**
a car-to-car communication system, which is configured to receive information relating to characteristics of the curved traffic lane (3) by means of a car-to-car communication from a vehicle already lying in the region of the curved traffic lane (3), wherein the warning device is configured to carry out a method according to any one of the preceding claims.

8. Vehicle, in particular motor vehicle (1), having a warning device according to claim 7.

## Revendications

1. Procédé pour avertir un conducteur d'un véhicule (1) avec les étapes :
- déterminer la position du véhicule (1) sur une chaussée (2) ;
- pour la position déterminée du véhicule (1), obtenir des données concernant une allure de chaussée courbe (3) dans la zone (4) devant le véhicule ;
- obtenir des données concernant le mouvement propre du véhicule (1) avec un capteur de dynamique de déplacement (5), dans lequel,
sur la base des données concernant l'allure de chaussée courbe (3) et des données concernant le mouvement propre, la chaussée courbe (3) dans la zone (4) devant le véhicule (1) est divisée en au moins deux zones critiques (12a, 12b, 12c, 12d, 12e), dans lequel un jugement (jaune, orange, rouge) est associé à chaque zone critique (12a, 12b, 12c, 12d, 12e), lequel jugement évalue le comportement de déplacement du véhicule (1) à l'intérieur de la zone critique respective (12a, 12b, 12c, 12d, 12e), et les jugements (jaune, orange, rouge) sont délivrés (6) au conducteur de véhicule, dans lequel, parmi les données concernant le mouvement propre du véhicule (1), au moins une vitesse de déplacement instantanée (v) du véhicule (1) le long de la chaussée (2) est obtenue et le jugement (jaune, orange, rouge) évalue le comportement de déplacement du véhicule (1) dans la zone critique respective (12a, 12b, 12c, 12d, 12e) en supposant que le véhicule (1) dans la zone critique respective (12a, 12b, 12c, 12d, 12e) a la vitesse de déplacement instantanée (v),
dans lequel la délivrance du jugement au conducteur de véhicule s'effectue de façon visuelle (6) et le jugement est délivré par un marquage coloré (jaune, orange, rouge) de la zone critique (12a, 12b, 12c, 12d, 12e) dessinée sur une allure de chaussée stylisée (11),
**caractérisé en ce que**, au moyen d'un système de communication entre véhicules, le véhicule (1) reçoit par l'intermédiaire d'une communication entre véhicules des informations concernant des caractéristiques de la chaussée courbe en provenance d'un deuxième véhicule déjà situé dans la zone de la chaussée courbe,
une chaussée avec plusieurs courbes étant représentée comme une section droite au niveau de l'allure de chaussée stylisée (11) et des courbes individuelles étant **caractérisées par** des symboles.

2. Procédé selon la revendication 1, **caractérisé en ce que** le jugement (jaune, orange, rouge) est une mesure de la probabilité pour que le véhicule (1) dans la zone critique (12a, 12b, 12c, 12d, 12e) ne soit pas capable de suivre l'allure de chaussée courbe (3).

3. Procédé selon l'une des revendications précédentes, **caractérisé en ce que** les données concernant l'allure de chaussée courbe (3) sont obtenues à partir d'une carte numérique (8) et comprennent en particulier des données concernant un rayon de courbure de chaussée (R) et/ou une pente de chaussée et/ou un état de chaussée.

4. Procédé selon l'une des revendications précédentes, **caractérisé en ce que** les données concernant le mouvement propre du véhicule (1) comprennent des données concernant une accélération longitudinale et/ou une accélération transversale du véhicule (1).

5. Procédé selon l'une des revendications précédentes, **caractérisé en ce que** la division en zones critiques (12a, 12b, 12c, 12d, 12e) et/ou la délivrance (6) du jugement (jaune, orange, rouge) s'effectuent en fonction de la position instantanée du véhicule (1) sur la chaussée (2) et/ou de données instantanées obtenues (v) concernant le mouvement propre du véhicule (1).

6. Procédé selon l'une des revendications précédentes, **caractérisé en ce que** la position du véhicule (1) sur la chaussée (2) est déterminée au moyen d'un capteur de signaux par satellite (9).

7. Dispositif d'avertissement pour avertir un conducteur d'un véhicule (1), avec
- une unité de détermination de position (9) pour déterminer la position du véhicule (1) sur la chaussée (2) ;
- une unité d'acquisition de données (8) qui est couplée à l'unité de détermination de position (9) et qui est réalisée pour obtenir, pour la position déterminée du véhicule (1), des données concernant une allure de chaussée courbe (3) dans la zone (4) devant le véhicule (1) ;
- un capteur de dynamique de déplacement (5) qui est réalisé pour obtenir des données concernant le mouvement propre (v) du véhicule (1),
- une unité d'évaluation (7) qui est réalisée pour diviser la chaussée courbe (3) dans la zone (4) devant le véhicule (1) en au moins deux zones critiques (12a, 12b, 12c, 12d, 12e) sur la base des données concernant l'allure de chaussée courbe (3) et des données concernant le mouvement propre (v), unité dans laquelle un jugement (jaune, orange, rouge) peut être associé à chaque zone critique (12a, 12b, 12c, 12d, 12e), lequel jugement évalue le comportement de déplacement du véhicule (1) à l'intérieur de la zone critique respective (12a, 12b, 12c, 12d, 12e), et dans laquelle, parmi les données concernant le mouvement propre du véhicule (1), au moins une vitesse de déplacement instantanée (v) du véhicule (1) le long de la chaussée (2) est obtenue et le jugement (jaune, orange, rouge) évalue le comportement de déplacement du véhicule (1) dans la zone critique respective (12a, 12b, 12c, 12d, 12e) en supposant que le véhicule (1) dans la zone critique respective (12a, 12b, 12c, 12d, 12e) a la vitesse de déplacement instantanée (v), et
- une unité de délivrance (6) pour délivrer le jugement (jaune, orange, rouge) au conducteur de véhicule,
**caractérisé par** un système de communication entre véhicules qui est réalisé pour recevoir par l'intermédiaire d'une communication entre véhicules des informations concernant des caractéristiques de la chaussée courbe (3) en provenance d'un véhicule déjà situé dans la zone de la chaussée courbe (3), le dispositif d'avertissement étant conçu pour mettre en oeuvre un procédé selon l'une des revendications précédentes.

8. Véhicule, notamment véhicule automobile (1), avec un dispositif d'avertissement selon la revendication 7.
